# EUROPEAN PATENT APPLICATION

(11) **EP 4 715 697 A1**
(43) Date of publication of application: **25.03.2026**
(21) Application number: 24382998.3
(22) Date of filing: 19.09.2024
(51) Int. Cl.: G06Q 10/047, G06Q 50/40

(54) **SYSTEM AND METHOD FOR DIRECTED GRAPH-BASED PRIORITIZATION OF AIRPORTS FOR TRAFFIC FLOW MODELLING**

(71) Applicant: The Boeing Company, Arlington, VA 22202 (US)
(72) Inventor: SCARLATTI JIMÉNEZ, David, 28042 MADRID (ES); DREWS, Robin Christian, 63263 NEU-ISENBURG (DE); BODENSOHN, David, 63263 NEU-ISENBURG (DE); JUENGST, Maximilian Peter, 63263 NEU-ISENBURG (DE); GÜEMES JIMÉNEZ, Alejandro, 28042 MADRID (ES); COSTAS ÁLVAREZ, Pablo, 28042 MADRID (ES)
(74) Representative: ZBM Patents - Zea, Barlocci & Markvardsen

(57) **Abstract**

A device includes a memory and one or more processors coupled to the memory. The processor(s) are configured to obtain historical flight data that represents a plurality of flights associated with a plurality of airports and to generate a directed graph, based on the historical flight data, that includes a plurality of nodes and a plurality of edges connecting pairs of nodes. The plurality of nodes correspond to the plurality of airports and the plurality of edges correspond to the plurality of flights. The processor(s) are configured to perform a ranking operation on the directed graph to identify one or more target nodes of the plurality of nodes. The one or more target nodes correspond to one or more airports of the plurality of airports. The processor(s) are configured to output a graphical user interface that indicates the one or more airports as recommended airports for modeling predicted traffic flow.

## Description

### FIELD OF THE DISCLOSURE

The present disclosure is generally related to air traffic control, and more particularly, to directed graph-based prioritization of airports for traffic flow modelling.

### BACKGROUND

Air traffic networks enable passengers to travel large geographic distances in a short amount of time to provide or maintain invaluable worldwide connections. Airline carriers that offer flights to destinations across the world attempt to schedule flights such that delays to passengers are reduced or minimized. However, due to the complexity of air traffic networks, flight performance and air traffic flow models that are designed to predict delays can be relatively inaccurate, particularly when scaling to worldwide air traffic networks. As machine learning technology has advanced, neural networks and other machine learning models have been leveraged to address the challenges of modelling air traffic flow and predicting delays. While the use of machine learning models has had some success in modelling air traffic flow for a single airport, the resource-intensive nature of these machine learning models can make scaling predictions from a single airport to multiple airports of an air traffic network impractical, even for airports in a relatively small geographic region. Additionally, current approaches that focus on specific airports, such as the busiest airports, prioritize modelling airports based on airport-level statistics that may not be indicative of the specific airports' importance to air traffic flow at the air traffic network-level. As such, air traffic flow modelling systems that model only the busiest airports can be inaccurate or provide relatively small predictive value for modelling air traffic flow in a worldwide air traffic network.

### SUMMARY

In a particular implementation, a device includes a memory. The device also includes one or more processors coupled to the memory. The one or more processors are configured to obtain historical flight data that represents a plurality of flights associated with a plurality of airports. The one or more processors are also configured to generate a directed graph based on the historical flight data. The directed graph includes a plurality of nodes and a plurality of edges connecting pairs of nodes of the plurality of nodes. The plurality of nodes correspond to the plurality of airports and the plurality of edges correspond to the plurality of flights. The one or more processors are configured to perform a ranking operation on the directed graph to identify one or more target nodes of the plurality of nodes. The one or more target nodes correspond to one or more airports of the plurality of airports. The one or more processors are further configured to output a graphical user interface (GUI) that indicates the one or more airports as recommended airports for modeling predicted traffic flow.

In another particular implementation, a method includes obtaining, by one or more processors, historical flight data that represents a plurality of flights associated with a plurality of airports. The method also includes generating, by the one or more processors, a directed graph based on the historical flight data. The directed graph includes a plurality of nodes and a plurality of edges connecting pairs of nodes of the plurality of nodes. The plurality of nodes correspond to the plurality of airports and the plurality of edges correspond to the plurality of flights. The method includes performing, by the one or more processors, a ranking operation on the directed graph to identify one or more target nodes of the plurality of nodes. The one or more target nodes correspond to one or more airports of the plurality of airports. The method further includes outputting, by the one or more processors, a graphical user interface (GUI) that indicates the one or more airports as recommended airports for modeling predicted traffic flow.

In another particular implementation, a non-transitory, computer-readable medium stores instructions that, when executed by one or more processors, cause the one or more processors to perform operations including obtaining historical flight data that represents a plurality of flights associated with a plurality of airports. The operations also include generating a directed graph based on the historical flight data. The directed graph includes a plurality of nodes and a plurality of edges connecting pairs of nodes of the plurality of nodes. The plurality of nodes correspond to the plurality of airports and the plurality of edges correspond to the plurality of flights. The operations include performing a ranking operation on the directed graph to identify one or more target nodes of the plurality of nodes. The one or more target nodes correspond to one or more airports of the plurality of airports. The operations further include outputting a graphical user interface (GUI) that indicates the one or more airports as recommended airports for modeling predicted traffic flow.

The features, functions, and advantages described herein can be achieved independently in various implementations or may be combined in yet other implementations, further details of which can be found with reference to the following description, drawings, and appendix.

### BRIEF DESCRIPTION OF THE DRAWINGS

FIG. 1 is a block diagram of an example of a system configured to support directed graph-based prioritization of airports for traffic flow monitoring.
FIG. 2 depicts examples of directed graphs that support prioritization of airports for traffic flow monitoring.
FIG. 3 depicts an example of a GUI generated by the system of FIG. 1.
FIG. 4 depicts another example of a GUI generated by the system of FIG. 1.
FIG. 5 is a flow chart that illustrates an example of a method of directed graph-based prioritization of airports for traffic flow monitoring.
FIG. 6 is a block diagram of a computing environment including a computing device configured to support aspects of computer-implemented methods and computer-executable program instructions (or code) according to the present disclosure.

### DETAILED DESCRIPTION

Aspects disclosed herein present systems, methods, and computer readable media that support directed graph-based prioritization of airports for air traffic flow modelling. According to some aspects, a system analyzes historical flight data that represents multiple flights associated with multiple airports of an air traffic network (e.g., a global or worldwide air traffic network, or a multi-regional air traffic network) to generate a directed graph for prioritizing airports in the air traffic network for modelling air traffic flow. To illustrate, the system generates, based on the historical flight data, a directed graph including nodes that represent airports and edges that represent flights. Each edge has a direction that indicates the direction of the corresponding flight. For example, if a first node corresponds to London, a second node corresponds to Paris, and a first edge connects the first node to the second node and points to the second node, these nodes and the first edge represent historical flight data associated with a flight from a London airport to a Paris airport. Instead of limited, carrier-specific flight data, the system can access publicly available global flight data and/or surveillance data (e.g., Automatic Dependent Surveillance-Broadcast (ADS-B) data), from public and third-party databases, to generate the directed graph.

After generating the directed graph, the system performs a ranking operation on the directed graph to identify a set of one or more target nodes that correspond to recommended (e.g., high priority) airports for modelling predicted air traffic flow. To display this information to a human operator, such as a flight scheduler, an air traffic controller, or a pilot, the system outputs a graphical user interface (GUI) that indicates the airports that correspond to the set of target nodes by setting one or more visual characteristics. For example, the GUI can include a map of a region or the world that includes multiple airports, and target airports on the map are displayed having a first visual characteristic (e.g., a first icon, a first color, a first size, or the like) and nontarget airports are displayed having a second visual characteristic (e.g., a second icon, a second color, a second size, or the like). These particular visualizations enable the information to be quickly and easily understood by the human operator, thereby enabling data-driven actions to identify influential airports or cohesive subnetworks that can be used as the foundation for building accurate air traffic flow prediction models.

In some aspects, the ranking operation includes applying a link analysis algorithm that ranks the nodes of the directed graph based on one or more characteristics associated with the nodes. The one or more characteristics can include, for each node: a number of edges that point to the node, a weight associated with the edges that point to the node, a number of other nodes having an edge that points to the node and having a threshold number of respective edges that point to other nodes (e.g., a number of other target or "high priority" nodes that point to the node), other characteristics, or a combination thereof. The highest ranked nodes by the link analysis algorithm are airports that have the highest probabilities that an air traveler will arrive at or depart from the airports during a random flight (e.g., based on flight patterns represented by the historical flight data). The link analysis algorithm thus ranks the airports represented by the nodes based on their interconnectivity within the air travel network, instead of merely based on the number of passengers or flights that are associated with the airports.

In some aspects, the ranking operation includes applying a clustering algorithm that clusters the nodes of the directed graph into groups based on labels of connected nodes. To illustrate, each node can be assigned an initial unique community identifier as a label, and during iterations of the clustering algorithm, the label for each node is updated to have the identifier included in the label of a majority of neighbor nodes, resulting in clusters of nodes based on relationships between neighboring nodes. Accordingly, as the clustering algorithm iterates to convergence, the number of clusters decreases until identification of one or more subnetworks of nodes that are highly interconnected to each other. The clustering algorithm can be performed until convergence or, in some examples, until a number of iterations satisfies an iteration limit that can be predefined or set based on user input. The subnetworks (e.g., the airports represented by the target nodes) identified by the clustering algorithm thus ranks airports into subsets of airports that can represent important communities for modelling air traffic flow within a larger air traffic network.

In some aspects, the ranking operation can include multiple ranking operations that include both the link analysis algorithm and the clustering algorithm. In these aspects, the link analysis algorithm and the clustering algorithm can be applied in any order in order to identify the most interconnected airports within one or more subnetworks within an air traffic network or to identify subnetworks within the overall most interconnected airports in the air traffic network. Additionally, or alternatively, the ranking operation can include filtering results based on properties associated with airports, flights, or a combination thereof. For example, the historical flight data can indicate aircraft types associated with historical flights, times of day or times of year associated with the historical flights, layover airports, end destination airports, airline carriers associated with the historical flights, regions associated with the airports or the historical flights, types of operations associated with the historical flights, other properties, or a combination thereof. Thus, the target nodes, and corresponding airports, that are identified by the ranking operation can be filtered by various properties to provide the most relevant airports for air traffic flow modelling in specific situations or to achieve specific goals.

One benefit of the disclosed system and method is the identification of and display of particular airports within a larger air traffic network, based on ranking of nodes of the directed graph, that have the most effect on air traffic flow within the air traffic network. For example, the particular airports can be the most interconnected within the air traffic network or can be a small community of highly interconnected airports, from an air traffic flow point of view, and thus are priority airports for modelling air traffic flow. To illustrate, modelling air traffic flow at the airport-level for the identified particular airports and aggregating the results can provide a network-level modelling of air traffic flow that is more accurate and has more predictive capability than other air traffic flow modelling systems that model air traffic flow of airports associated with the most passengers or the largest population cities. This higher accuracy air traffic flow modelling is achieved without the significant processing resource use and time-consuming training of modelling the air traffic flow for each airport in the air traffic network. Thus, the air traffic flow modelling of the present disclosure can be scaled to large air traffic networks, such as multi-region or global air traffic networks in a practical manner with existing computer systems in a cost-effective deployment.

The figures and the following description illustrate specific exemplary embodiments. It will be appreciated that those skilled in the art will be able to devise various arrangements that, although not explicitly described or shown herein, embody the principles described herein and are included within the scope of the claims that follow this description. Furthermore, any examples described herein are intended to aid in understanding the principles of the disclosure and are to be construed as being without limitation. As a result, this disclosure is not limited to the specific embodiments or examples described below, but by the claims and their equivalents.

Particular implementations are described herein with reference to the drawings. In the description, common features are designated by common reference numbers throughout the drawings.

As used herein, various terminology is used for the purpose of describing particular implementations only and is not intended to be limiting. For example, the singular forms "a," "an," and "the" are intended to include the plural forms as well, unless the context clearly indicates otherwise. Further, some features described herein are singular in some implementations and plural in other implementations. To illustrate, a system may be described herein as including one or more computing devices ("computing device(s)"), which indicates that in some implementations the system includes a single computing device and in other implementations the system includes multiple computing devices. For ease of reference herein, such features are generally introduced as "one or more" features, and are subsequently referred to in the singular or optional plural (as typically indicated by "(s)") unless aspects related to multiple of the features are being described.

The terms "comprise," "comprises," and "comprising" are used interchangeably with "include," "includes," or "including." Additionally, the term "wherein" is used interchangeably with the term "where." As used herein, "exemplary" indicates an example, an implementation, and/or an aspect, and should not be construed as limiting or as indicating a preference or a preferred implementation. As used herein, an ordinal term (e.g., "first," "second," "third," etc.) used to modify an element, such as a structure, a component, an operation, etc., does not by itself indicate any priority or order of the element with respect to another element, but rather merely distinguishes the element from another element having a same name (but for use of the ordinal term). As used herein, the term "set" refers to a grouping of one or more elements, and the term "plurality" refers to multiple elements.

As used herein, "generating," "calculating," "using," "selecting," "accessing," and "determining" are interchangeable unless context indicates otherwise. For example, "generating," "calculating," or "determining" a parameter (or a signal) can refer to actively generating, calculating, or determining the parameter (or the signal) or can refer to using, selecting, or accessing the parameter (or signal) that is already generated, such as by another component or device. As used herein, "coupled" can include "communicatively coupled," "electrically coupled," or "physically coupled," and can also (or alternatively) include any combinations thereof. Two devices (or components) can be coupled (e.g., communicatively coupled, electrically coupled, or physically coupled) directly or indirectly via one or more other devices, components, wires, buses, networks (e.g., a wired network, a wireless network, or a combination thereof), etc. Two devices (or components) that are electrically coupled can be included in the same device or in different devices and can be connected via electronics, one or more connectors, or inductive coupling, as illustrative, non-limiting examples. In some implementations, two devices (or components) that are communicatively coupled, such as in electrical communication, can send and receive electrical signals (digital signals or analog signals) directly or indirectly, such as via one or more wires, buses, networks, etc. As used herein, "directly coupled" is used to describe two devices that are coupled (e.g., communicatively coupled, electrically coupled, or physically coupled) without intervening components. The term "substantially" is defined as largely but not necessarily wholly what is specified (and includes what is specified; for example, substantially 90 degrees includes 90 degrees and substantially parallel includes parallel), as understood by a person of ordinary skill in the art. In any disclosed implementations, the term "substantially" may be substituted with "within [a percentage] of" what is specified, where the percentage includes 0.1, 1, 5, or 10 percent; and the term "approximately" may be substituted with "within 10 percent of" what is specified. The statement "substantially X to Y" has the same meaning as "substantially X to substantially Y," unless indicated otherwise. Likewise, the statement "substantially X, Y, or substantially Z" has the same meaning as "substantially X, substantially Y, or substantially Z," unless indicated otherwise.

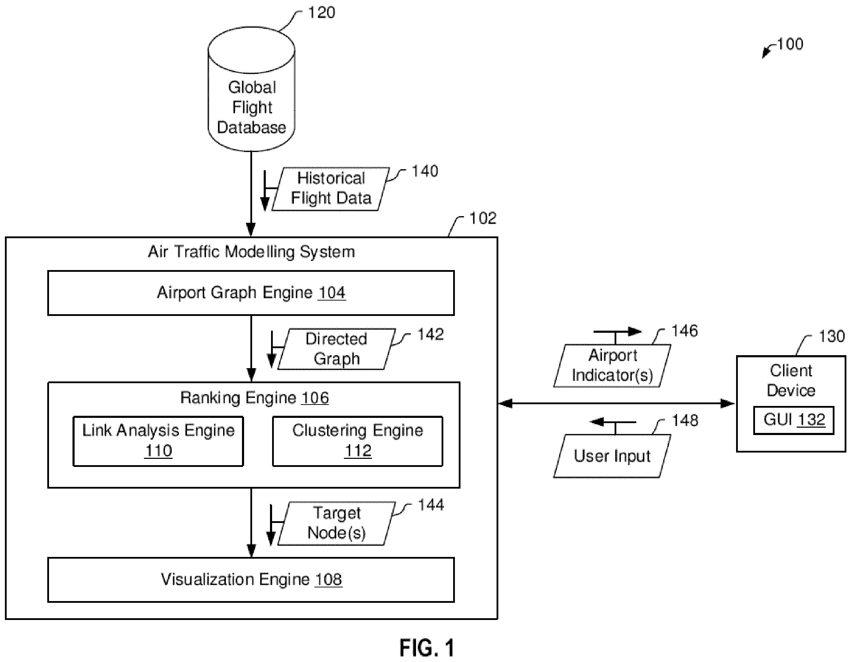

FIG. 1 is a block diagram of an example of a system 100 that is configured to support directed graph-based prioritization of airports for traffic flow monitoring. In the example shown in FIG. 1, the system 100 includes an air traffic modelling system 102, one or more global flight databases 120, and a client device 130. The example of the system 100 shown in FIG. 1 is illustrative. It should be appreciated that in some other implementations, the system 100 omits one or more of the components shown in FIG. 1 and/or includes additional component(s) that are not shown in FIG. 1, such as additional client devices, additional databases, and/or one or more networked or cloud service devices or components.

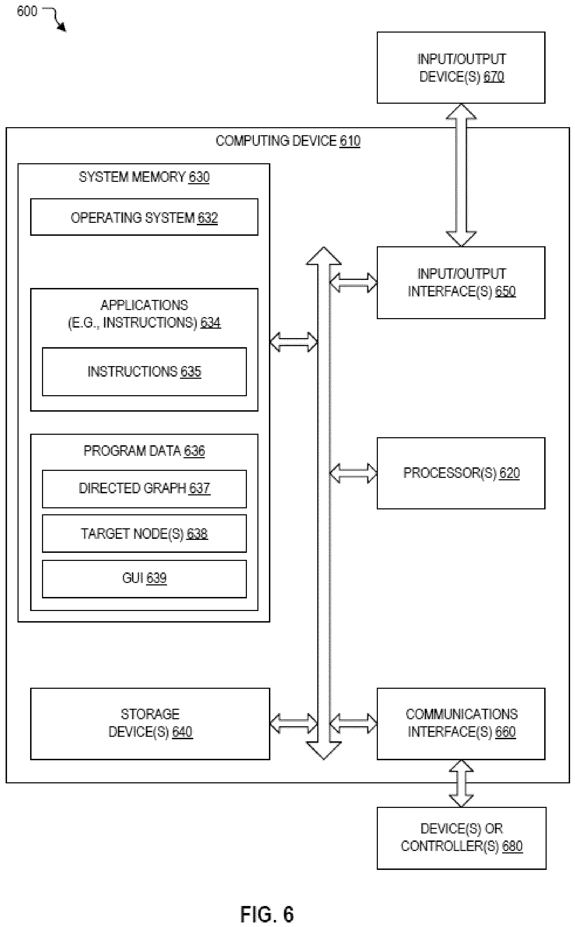

The air traffic modelling system 102 is configured to prioritize airports for air traffic flow modelling using a directed graph, as further described herein. In some implementations, the air traffic modelling system 102 includes or corresponds to a server, desktop computing device, a laptop computing device, a personal computing device, a tablet computing device, a mobile device (e.g., a smart phone, a tablet, a personal digital assistant (PDA), a wearable device, and the like), a server, a virtual reality (VR) device, an augmented reality (AR) device, an extended reality (XR) device, a vehicle (e.g., an aircraft, or a component thereof), other computing devices, or a combination thereof, as non-limiting examples. The air traffic modelling system 102 can include one or more processors, memories, and communication interfaces (not shown in FIG. 1) to support the functionality described herein. In the example shown in FIG. 1, the air traffic modelling system 102 includes an airport graph engine 104, a ranking engine 106, and a visualization engine 108. Although illustrated as distinct components, in other implementations, one or more of the airport graph engine 104, the ranking engine 106, or the visualization engine 108 are combined such that a single component performs the associated functionality described herein. Additionally, or alternatively, the operations described herein as being performed by the airport graph engine 104, the ranking engine 106, and the visualization engine 108 can be performed by a processor that executes instructions stored at a memory, similar to a processor and a memory described herein with reference to FIG. 6.

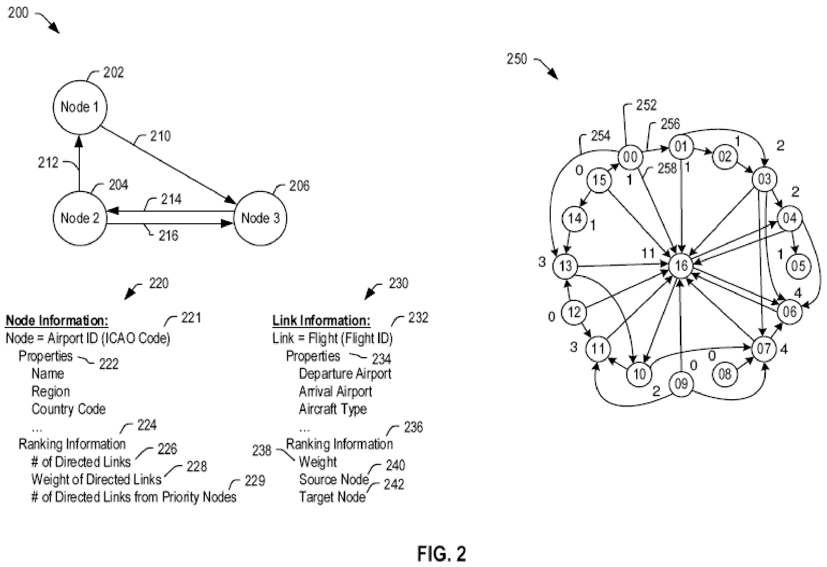

The airport graph engine 104 is configured to obtain historical flight data 140 associated with multiple airports across multiple regions for use in generating a directed graph 142. The directed graph 142 includes multiple nodes and multiple edges that connect pairs of nodes within the directed graph 142, with each node in the directed graph 142 corresponding to an airport and each edge representing a historical flight between the airports that correspond to the two connected nodes. For example, the airport graph engine 104 can generate the directed graph 142 such that, for each historical flight represented by the historical flight data 140, the airport graph engine: adds (or identifies) a first node that represents the departure airport; adds (or identifies) a second node that represents the arrival airport; and adds an edge that connects the first node to the second node and points to the second node as corresponding to the arrival airport. An example of a directed graph generated based on historical flight data is described further herein with reference to FIG. 2. In some implementations, the airport graph engine 104 is configured to obtain the historical flight data 140 for particular types of aircraft, particular airline carriers, particular types of flights, particular times of day or day(s) of the week, particular month(s) of the year, particular passenger counts, or the like.

The ranking engine 106 is configured to perform one or more ranking operations on the directed graph 142 to identify one or more target nodes 144. For example, the ranking engine 106 can perform a link analysis on the directed graph 142 and/or a clustering process on the directed graph 142 to rank the nodes of the directed graph 142, as further described herein, and the highest ranked nodes (or a particular set of the ranked nodes) can be output as the target nodes 144. According to some aspects, the ranking engine 106 includes a link analysis engine 110 that is configured to perform the link analysis and a clustering engine 112 that is configured to perform the clustering process. The ranking performed by the ranking engine 106 can include ranking based on link analysis performed by the link analysis engine 110, clustering performed by the clustering engine 112, or both. In implementations that include both link analysis and clustering, the ranking based on the link analysis can be performed before the ranking based on the clustering or the ranking based on the clustering can be performed before the ranking based on the link analysis, depending on the configuration of the ranking engine 106 or based on user selection.

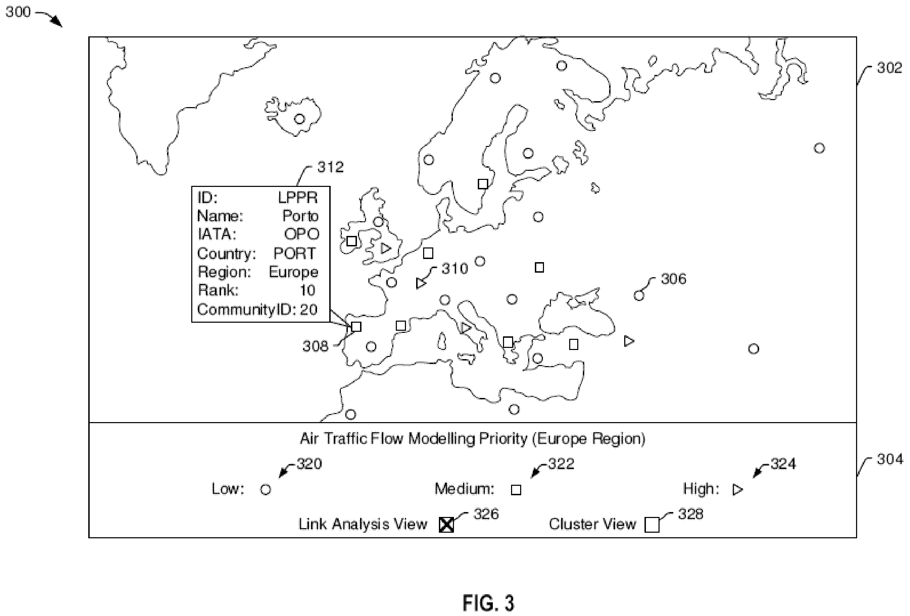

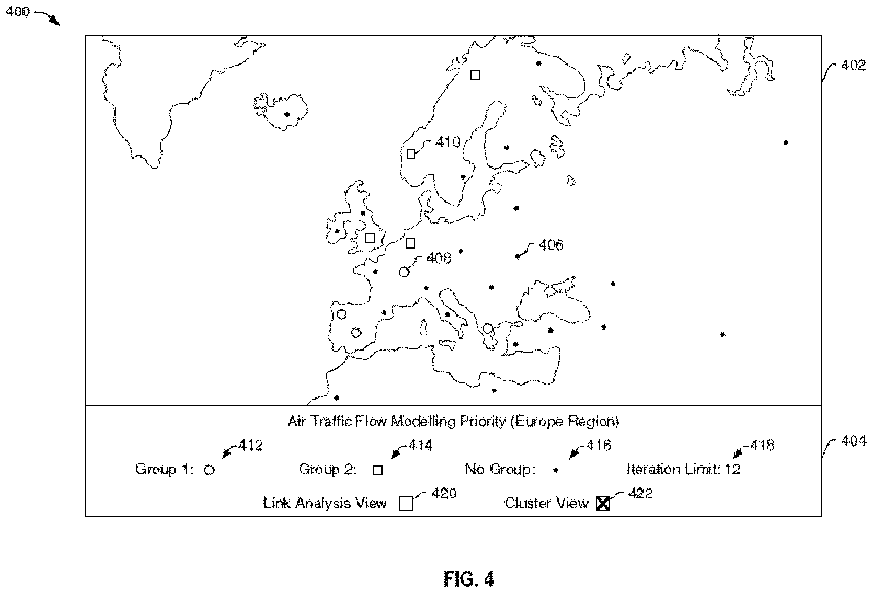

The visualization engine 108 is configured to generate information for display that represents airports that are prioritized for air traffic flow modelling or other information that is generated by the air traffic modelling system 102 (e.g., the airport graph engine 104 and/or the ranking engine 106). For example, the visualization engine 108 is configured to output a graphical user interface (GUI) or one or more visual indicators for display within a GUI, such as a GUI 132 displayed at a client device 130, as further described herein. Examples of the GUI 132 are illustrated with reference to FIG. 3 and FIG. 4. In aspects, the GUI 132 includes displayable indicators that represent the target nodes 144, as further described herein.

The air traffic modelling system 102 is communicatively coupled to the global flight database 120 and to the client device 130 by one or more networks. The one or more networks can include wired networks, wireless networks, or a combination thereof. For example, the one or more networks can include a Wi-Fi network, a cellular network, a satellite network, a long-range (LoRa) network, a Bluetooth network, a Zigbee network, other types of networks, or a combination thereof. The air traffic modelling system 102 is configured to perform electronic communications (e.g., to receive data from, to send data to, or both) with the global flight database 120 and the client device 130 via the one or more networks.

The global flight database 120 includes one or more databases that store, or have access to, flight data from multiple regions across the world (e.g., the global flight database 120 is not a region-specific or provider-specific flight database). The global flight database 120 can include publicly available databases, such as third-party databases, government databases, flight data service provider databases, or a combination thereof, that provide flight data (e.g., global or multi-regional flight data). In some implementations, the global flight database 120 stores surveillance data of air travel during one or more historical time periods. The data stored by the global flight database 120 can be arranged according to, or processed and sorted according to, one or more characteristics of historical flights or aerial surveillance. For example, the characteristics can include departure airports, arrival airports, aircraft type, airline carrier, number of passengers, time of flight (e.g., departure time, arrival time, duration of flight, etc.), type of flight (e.g., passenger flight, cargo flight, etc.), other characteristics, or a combination thereof, associated with the historical flights.

The client device 130 is configured to communicate with the air traffic modelling system 102 to enable directed graph-based prioritization of airports for air traffic flow modelling. Although illustrated as a single client device 130, in other implementations, the system 100 includes multiple client devices 130 configured to communicate with the air traffic modelling system 102. In some implementations, the client device 130 includes a server, desktop computing device, a laptop computing device, a personal computing device, a tablet computing device, a mobile device (e.g., a smart phone, a tablet, a PDA, a wearable device, and the like), a server, a VR device, an AR device, an XR device, other computing devices, or a combination thereof, as non-limiting examples. Alternatively, the client device 130 can include an aircraft control tower system, a flight scheduling system, or an aircraft (or a system onboard the aircraft). In implementations, the client device 130 executes an application (e.g., an air traffic flow modelling application, a flight scheduling application, or a map application) that displays the GUI 132, such as at a display device coupled to or integrated within the client device 130. The GUI 132 can be generated and received from the air traffic modelling system 102 or generated by the client device 130 based on at least some information from the air traffic modelling system 102. Although displayed as separate elements in FIG. 1, in some other implementations, the operations described herein with reference to the air traffic modelling system 102 and the client device 130 are performed by a single device.

During operation of the system 100, the air traffic modelling system 102 obtains the historical flight data 140 from the global flight database 120. The historical flight data 140 includes data for multiple historical flights, each of which is associated with a departure airport and an arrival airport. As an illustrative example, the historical flight data 140 can represent historical flights from London to Amsterdam, from Brussels to Frankfurt, from Frankfurt to Brussels, from Brussels to Amsterdam, and from Brussels to London. The historical flight data 140 can indicate, for each respective historical flight, identification information, a departure point (e.g., a departure airport), and an arrival point (e.g., an arrival airport). In some examples, the historical flight data 140 also indicates a flown distance (e.g., a distance flown during the flight that originated at the departure point and concluded at the arrival point), a flight time, a flight date, an aircraft type, a passenger count, a flight type, an airline carrier, an on-time status, a geographic region, other information, or a combination thereof.

In some implementations, the air traffic modelling system 102 obtains the historical flight data 140 that corresponds to a group of departure airports and arrival airports for which air traffic flow is to be monitored, and optionally that corresponds to one or more additional parameter values (e.g., historical flight data for associated with aircraft type, historical flight data associated with a particular airline carrier, etc.). The historical flight data 140 may be obtained periodically or over time, or on-demand, such as when air traffic flow modelling is initiated. In some implementations, the obtained information can be stored at the air traffic modelling system 102 or provided to the airport graph engine 104 for processing.

After obtaining the historical flight data 140, the airport graph engine 104 generates the directed graph 142 based on historical flight data 140. For example, the airport graph engine 104 can analyze the historical flight data 140 to determine a group of departure airports and a group of arrival airports that correspond to historical flights represented by the historical flight data 140. The airport graph engine 104 may generate a node that corresponds to each unique airport within the group of departure airports and the group of arrival airports, and the airport graph engine 104 may generate edges (also referred to as links) between pairs of nodes to represent the various historical flights. For example, for a historical flight from London to Brussels, the airport graph engine 104 can add an edge that connects a first node that corresponds to London to a second node that corresponds to Brussels with the edge pointing to the second node (e.g., in the direction from the first node to the second node). This process can be repeated for other historical flights represented by the historical flight data 140 to generate the directed graph 142. In some implementations, if multiple historical flights correspond to the same flight path (e.g., the historical flights have the same departure airport and the same arrival airport), multiple edges between the two corresponding nodes may be added to the directed graph 142. Alternatively, a weight of each edge may have an initial value when representing a single flight between two airports, and for each additional flight between the same two airports, the airport graph engine 104 may increase the weight of the edge between the two corresponding nodes in the directed graph 142. Although the edges are described as pointing to the nodes that correspond to arrival airports, in other implementations, the edges can point (e.g., be directed) to the nodes that correspond to departure airports.

In some aspects, the edges of the directed graph 142 do not have weights or are each associated with a single common value. In some other aspects, each of the edges of the directed graph 142 may have a corresponding weight. The weight of an edge can be based on one or more characteristics associated with one or more historical flights between the airports that correspond to the nodes connected by the edge, characteristics associated with the nodes connected by the edge, or a combination thereof. In some examples, the one or more characteristics include a number of historical flights from the corresponding departure airport to the corresponding arrival airport, an aircraft type associated with the historical flight, an airline carrier associated with the historical flight, a passenger count associated with the historical flight, a time of day associated with the historical flight, a day of the week associated with the historical flight, a month of the year associated with the historical flight, a flight type associated with the historical flight, a number of edges that point to the node that corresponds to the arrival airport, a number of edges that point to the node that corresponds to the departure airport, a total number of edges that connect to the node that corresponds to the arrival airport, a total number of edges that connect to the node that corresponds to the departure airport, or a combination thereof. For example, if the historical flight data 140 represents three flights from London to Brussels, five flights from Frankfurt to Amsterdam, and one flight from Amsterdam to London, a first edge that points from a first node corresponding to London to a second node corresponding to Brussels has a weight of 3x, a second edge that points from a third node that corresponds to Frankfurt and a fourth node that corresponds to Amsterdam has a weight of 5x, and a third edge that points from the fourth node to the first node has a weight of x, where x is an initial or default value. As another example, if the air traffic flow to be modelled gives higher priority to weekend air traffic, an edge that corresponds to a historical flight on a Wednesday may have a weight that is less, such as 2x or 3x less, than an edge that corresponds to a historical flight on a Friday night.

In some implementations, the airport graph engine 104 adjusts weights of one or more of the edges of the directed graph 142 based on one or more flight parameters indicated by user input 148. For example, a user of the client device 130 may provide the user input 148 that indicates that air traffic flow is to be monitored only for a particular type of aircraft. In this example, the airport graph engine 104 receives the user input 148 that indicates the particular aircraft type, and based on the user input 148, the airport graph engine 104 adjusts the weights of edges that correspond to historical flights associated with other aircraft types (e.g., flights that were not performed by the particular aircraft type) to zero such that the ranking of airports will be performed only for flights associated with the particular aircraft type. This example is illustrative, and in other examples, the user input 148 can include one or more other parameters and/or the airport graph engine 104 can adjust the weights by reducing or increasing the weights to other values or by other amounts. Additionally, or alternatively, the airport graph engine 104 can filter the directed graph 142 based on one or more parameters that include on-time status, airline carrier, geographic region, aircraft type, other parameters, or a combination thereof. Filtering the directed graph 142 can include adjusting weights to zero for filtered parameters values, or providing only nodes and edges that correspond to selected parameter values to the ranking engine 106 for ranking. In some examples, the one or more values of the one or more parameters for use in filtering the directed graph 142 are received via the user input 148.

The ranking engine 106 performs one or more ranking operations on the directed graph 142 to identify the target nodes 144, which correspond to one or more airports (e.g., as departure airports or arrival airports). In some implementations, the ranking operations are one or more link analysis operations performed by the link analysis engine 110. To illustrate, the link analysis engine 110 can perform (e.g., apply) a link analysis algorithm on the directed graph 142 that ranks the nodes based on one or more node parameters indicative of interconnectedness. In some examples, the node parameters of a node include a number of edges that point to the node, a weight associated with the edges that point to the node, a number of other nodes having an edge that points to the node and having a threshold number of respective edges that point to the other nodes, or any combination thereof. An example of applying the link analysis algorithm to a directed graph is further described herein with reference to FIG. 2. In aspects, the nodes identified by the link analysis algorithm (e.g., the target nodes 144) represent airports having highest probabilities that an air traveler will arrive at or depart from the identified airports during a random flight. For example, projecting a random traveler on a random flight based on the historical flight data 140, the random traveler would be more likely to depart from or arrive from airports that correspond to the identified nodes than all other airports represented by other nodes in the directed graph 142.

In some implementations, the ranking operations correspond to a clustering process performed by the clustering engine 112. To illustrate, the clustering engine 112 can perform (e.g., apply) a clustering algorithm on the directed graph 142 that clusters the nodes into one or more groups based on labels of connected nodes. Such a clustering algorithm may include or correspond to, or be based on, a label propagation algorithm. For example, an initial stage of the clustering algorithm can include generating a label for each node that indicates a unique identifier. After generating the initial labels, an iteration of clustering is performed and the labels for each node are updated to include the identifier possessed by the majority of the node's neighboring node. The clustering algorithm can iterate until convergence or until a fixed number n of iterations are performed, with typically most iterations resulting in a decrease in the number of unique identifiers across the labels of all nodes as clusters become larger. In some implementations, whether the clustering algorithm is performed until convergence or until an iteration limit is satisfied, and optionally the iteration limit itself, is based on input from a user. For example, the user input 148 received from the client device 130 can indicate whether clustering is to be performed until convergence or until an iteration limit, as well as the iteration limit. One or more nodes identified by labels during the clustering algorithm are highest ranked nodes that correspond to a subset of airports for which air traffic flow is highly interconnected, which can also be referred to as a sub-network within a larger air travel network. As such, if a particular airport within a sub-network is selected for modelling air traffic flow, other members of the sub-network are identified as being particularly relevant to modelling the air traffic flow of the particular airport.

In some implementations, the ranking engine 106 performs a single type of ranking on the directed graph 142. For example, the ranking engine 106 may initiate performance of the link analysis algorithm by the link analysis engine 110 or the clustering algorithm by the clustering engine 112. Alternatively, both types of ranking can be performed in either order. As an example, the link analysis engine 110 can perform the link analysis algorithm based on the directed graph 142 to generate a first set of nodes that represents airports that a random traveler is most likely to depart from or arrive at, and the clustering engine 112 can perform the clustering algorithm on the first set of nodes (or the weights of the first set of nodes can be increased and the clustering algorithm can be performed on the directed graph 142 after this adjustment) to identify the target nodes 144 as a sub-network of airports that are highly interconnected from among the airports that are most likely to be departed from or arrived at by a random traveler. As another example, the clustering engine 112 can perform the clustering algorithm based on the directed graph 142 to generate a second set of nodes that represents airports that are highly interconnected (e.g., a sub-network), and the link analysis engine 110 can perform the link analysis algorithm on the second set of nodes (or the weights of the second set of nodes can be increased and the link analysis algorithm can be performed on the directed graph 142 after this adjustment) to identify the target nodes 144 as the most likely airports that are to be departed from or arrived at by a random traveler within the identified highly-interconnected sub-network of airports.

The visualization engine 108 receives the target nodes 144 from the ranking engine 106 and outputs, based on the target nodes 144, one or more airport indicators 146 (e.g., displayable indicator(s) associated with departure and/or arrival airports) that are sent to the client device 130. The airport indicators 146 can be displayed via a display device, such as at the client device 130, to visually represent the airports having the highest priority to model for generating an air traffic flow model of a multi-region or global air traffic network. Stated another way, the visualization engine 108 identifies the airports that correspond to the target nodes 144 (e.g., from the directed graph 142) and outputs displayable indicators (e.g., the airport indicators 146) that identify the airports having the largest effect (e.g., the strongest influence) on the air traffic flow model for the air traffic network. In aspects, the airport indicators 146 include indicators of airports (e.g., at various locations on a map), an indicator along a flight path, an indicator of a ranking, or another type of indicator. Additionally, or alternatively, the airport indicators 146 can include alert(s) or additional information associated with the nodes of the directed graph 142 and derived from the historical flight data 140, as further described herein with reference to FIG. 2.

In some implementations, the visualization engine 108 supports the GUI 132 for generation and display at one or more client devices, such as the client device 130. The GUI 132 can include the airport indicators 146 (e.g., displayable indicators) overlaid on a map of one or more airports within an air traffic network, such as in an air traffic control display or in another manner, to enable a user such as an air traffic controller, an air traffic flow modeler, a flight scheduler, or a pilot to quickly and easily understand prioritization of various airports for modeling air traffic flow for the air travel network. In some implementations, in addition to a map that depicts the airports associated with the airport indicators 146, and optionally one or more remaining airports, the GUI 132 can also include, for each of the airports associated with the airport indicators 146, a respective label that includes an identifier associated with the airport, ranking information associated with the airport, group information (e.g., identification of a sub-network or subset to which the airport belongs) associated with the airport, other information, or a combination thereof. Various examples of the GUI 132 are described further herein, with reference to FIG. 3 and FIG. 4.

In some implementations, the visualization engine 108 sets one or more characteristics of the airport indicators 146 to first value(s) and one or more characteristics of indicators of the remaining airports to second value(s) that are different than the first values. The characteristic(s) include a color, an intensity, a font, an icon, a visibility status, other characteristics, or a combination thereof. As a particular example, the visualization engine 108 can set a color of the airport indicators 146 to be a first color (e.g., red) and a color of other airport indicators to a second color (e.g., yellow). As another example, the visualization engine 108 can set an intensity of the airport indicators 146 to be a first intensity (e.g., high brightness) and an intensity of other airport indicators to a second intensity (e.g., low brightness). As an additional example, the visualization engine 108 can set a shape of icons for the airport indicators 146 to a first shape (e.g., triangles) and a shape of icons for other airport indicators to a second shape (e.g., circles).

The configuration of the air traffic modelling system 102, and particularly the interaction of the airport graph engine 104, the ranking engine 106, and the visualization engine 108 enables the identification of and display of particular airports within a larger air traffic network that have the most effect on air traffic flow within the air traffic network. For example, the airports associated with the airport indicators 146 can be the most interconnected within the air traffic network or can be a small community of highly interconnected airports, from an air traffic flow point of view, and thus are priority airports for modelling air traffic flow within the air traffic network. To illustrate, modelling air traffic flow at the airport-level for the airports associated with the airport indicators 146 and aggregating the results can provide a network-level modelling of air traffic flow that is more accurate and has more predictive capability than other air traffic flow modelling systems that model air traffic flow of airports associated with the most passengers or the largest population cities. This higher accuracy air traffic flow modelling is achieved by the system 100 through the generation of the directed graph 142 and the ranking performed by the ranking engine 106, without the significant processing resource use and time-consuming training associated with modelling the air traffic flow of each airport in the air traffic network. Thus, the air traffic flow modelling in prioritized order provided by the output of the air traffic modelling system 102 can be scaled to large air traffic networks, such as multi-region or global air traffic networks in a practical manner with existing computer systems in a cost-effective deployment.

FIG. 2 depicts examples of directed graphs that support prioritization of airports for traffic flow monitoring. FIG. 2 includes a first example of a directed graph 200 and a second example of a directed graph 250. The directed graph 200 is a portion of a directed graph or a simplistic directed graph that is provided for illustration, and in other examples, the directed graph 200 includes more than three nodes as shown in FIG. 2.

The directed graph 200 includes a plurality of nodes and a plurality of edges that connect pairs of the plurality of nodes and point from a source node to a target node. The nodes correspond to airports in an air travel network, and the edges correspond to flights represented by historical flight data associated with the air travel network. To illustrate, the directed graph 200 includes a first node 202 ("Node 1") that corresponds to a first airport, a second node 204 ("Node 2") that corresponds to a second airport, and a third node 206 ("Node 3") that corresponds to a third airport. Additionally, the directed graph 200 includes a first edge 210 that connects the first node 202 and the third node 206, a second edge that connects the first node 202 and the second node 204, a third edge 214 that connects the second node 204 and the third node 206, and a fourth edge 216 that connects the second node 204 and the third node 206. To represent the direction of the historical flights that correspond to the edges 210-216 (e.g., from a departure airport to an arrival airport), each of the edges 210-216 point from a node that corresponds to a departure airport to a node that corresponds to an arrival airport. To illustrate, the first edge 210 points from the first node 202 to the third node 206, the second edge 212 points from the second node 204 to the first node 202, the third edge 214 points from the third node 206 to the second node 204, and the fourth edge 216 points from the second node 204 to the third node 206. As such, the first edge 210 represents a first historical flight that departed from the first airport and arrived at the third airport, the second edge 212 represents a second historical flight that departed from the second airport and arrived at the first airport, the third edge 214 represents a third historical flight that departed from the third airport and arrived at the second airport, and the fourth edge 216 represents a fourth historical flight that departed from the second airport and arrived at the third airport.

To construct the directed graph 200, the airport graph engine 104 performs operations that include analyzing historical flight data (e.g., the historical flight data 140 of FIG. 1) to identify departure and arrival airports of historical flights, populating the nodes 202-206 that correspond to the identified airports, and connecting pairs of the nodes 204-206 with the edges 210-216 that point in directions (e.g., between nodes) that correspond to the directions (e.g., between airports) associated with the historical flights. In implementations in which the directed graph 200 includes more than three nodes and more than four edges, the airport graph engine 104 identifies additional airports associated with additional historical flights and populates the directed graph 200 with additional nodes that correspond to the additional airports and additional edges that correspond to the additional flights.

According to some aspects, one or more of the nodes 202-206 are associated with respective node information. An illustrative example of node information 220 is shown in FIG. 2. In this example, the node information 220 includes an airport identifier 221 (e.g., an International Civil Aviation Organization (ICAO) code) associated with the airport represented by the node, node properties 222, and ranking information 224. The node properties 222 can include a name (e.g., an airport name, a city name, etc.), a region (e.g., a state, a country, a continent, or another type of region), a country code (e.g., an identifier of the country in which the airport is located), other information, or a combination thereof. The ranking information 224 can include a directed link count 226 ("# of Directed Links"), an aggregated link weight 228 ("Weight of Directed Links"), a priority directed link count 229 ("# of Directed Links from Priority Nodes"), or a combination thereof. The directed link count 226 indicates a number of the edges 210-216 that point to the node, the aggregated link weight 228 indicates a sum (or other aggregated value) of the weights of the edges 210-216 that point to the node, and the priority directed link count 229 indicates a number of the edges 210-216 that point to the node and that point from a "priority node," which is another node that has a threshold number or more of links that point to the other node. In other examples, the node information 220 includes fewer information elements than shown in FIG. 2, additional information elements not shown in FIG. 2, or both.

In an example that is based on the directed graph 200 and in which the threshold is two and the weights of the edges 210-212 and 216 are 0.5 and the weight of the third edge 214 is 1.0, the directed link count 226 for the second node 204 is one because the third edge 214 points to the second node 204. In this example, the aggregated link weight 228 for the second node 204 is 1.0 because the weight of the third edge 214 is 1.0. Additionally, the priority directed link count 229 for the second node 204 is one because the third edge 214 points to the second node 204 from the third node 206 and the third node 206 is considered a priority node since it has two or more edges (e.g., the first edge 210 and the fourth edge 216) that point to it.

According to some aspects, one or more of the edges 210-216 are associated with respective link information. An illustrative example of link information 230 is shown in FIG. 2. In this example, the link information 230 includes a link identifier 232 (e.g., a flight identifier) associated with the historical flight represented by the edge, link properties 234, and ranking information 236. The link properties 234 can include a name of the departure airport (e.g., a name of the airport represented by the source node), a name of the arrival airport (e.g., a name of the airport represented by the target node), an aircraft type associated with the historical flight, other information (e.g., a passenger count, a flight type, an airline carrier, etc.), or a combination thereof. The ranking information 236 can include a weight 238 ("Weight") associated with the edge, a source node rank 240 ("Source Node"), a target node rank 242 ("Target Node"), or a combination thereof. The weight 238 associated with the edge can be based on one or more parameters indicated by the link properties 234 or associated with a respective source node or target node, the source node rank 240 indicates a ranking (e.g., the directed link count 226, the aggregated link weight 228, and/or the priority directed link count 229) associated with the respective source node, and the target node rank 242 indicates a ranking (e.g., the directed link count 226, the aggregated link weight 228, and/or the priority directed link count 229) associated with the respective target node. In other examples, the link information 230 includes fewer information elements than shown in FIG. 2, additional information elements not shown in FIG. 2, or both.

In an example that is based on the directed graph 200 and in which the weight of the first edge 210 is 0.5 and the ranking associated with source and target nodes is the directed link count 226, the weight 238 for the first edge 210 is 0.5. In this example, the source node rank 240 for the first edge 210 is one because the first node 202 has one edge (e.g., the second edge 212) that points to it. Additionally, the target node rank 242 for the first edge 210 is two because the third node 206 has two edges (e.g., the first edge 210 and the fourth edge 216) that point to it.

As described above with reference to FIG. 1, one or more ranking operations can be performed on nodes of a directed graph to cause output of the target nodes 144. In some implementations, the ranking operations include link analysis operations performed by the link analysis engine 110 that rank the nodes based on numbers of edges that point to the nodes, and optionally other information. As an illustrative example, the link analysis engine 110 can perform link analysis operations on the directed graph 200 to rank the nodes 202-206 based on the number of edges that point to each of the nodes 202-206, and optionally additional information included in the node information 220 for the respective nodes, additional information included in the link information 230 for the edges that point to the respective nodes, or both. To illustrate, if the weights of each of the links 210-216 are the same and if there are no priority nodes (or if the threshold number of edges that point to priority nodes is greater than two), the link analysis operations performed by the link analysis engine 110 may rank the third node 206 above the first node 202 and the second node 204 because two edges (e.g., the first edge 210 and the fourth edge 216) point to the third edge 214 and only a single edge (e.g., the second edge 212 or the third edge 214) point to either the first node 202 or the second node 204, respectively. As another example, if the threshold associated with priority nodes is two, and if the ranks for the source node and the target node correspond to the priority directed link count 229, the link analysis operations performed by the link analysis engine 110 may rank the second node 204 above the third node 206 and the first node 202 because one priority node (e.g., the third node 206, which is pointed to by the first edge 210 and the fourth edge 216) is a source node for the third edge 214 that points to the second node 204 and no priority nodes are source nodes for edges that point to either the first node 202 or the third node 206. The above-described examples are provided for illustration and are not limiting. In other examples, the ranking can be performed based on other information or based on clustering performed by the clustering engine 112.

The directed graph 250 provides a more complicated example of a directed graph than the directed graph 200. Similar to the directed graph 200, the directed graph 250 includes a plurality of nodes and a plurality of edges that connect pairs of the plurality of nodes and point from a source node to a target node. The nodes correspond to airports in an air travel network, and the edges correspond to flights represented by historical flight data associated with the air travel network. To illustrate, the directed graph 250 includes seventeen nodes "00" - "17" that correspond to seventeen airports "00" - "17", including an illustrative node 252 ("00") that corresponds to a first airport, and edges that connect pairs of the nodes, including an illustrative first edge 254 that connects node 00 (e.g., the node 252) and node 13, an illustrative second edge 256 that connects node 00 and node 01, and an illustrative third edge 258 that connects node 00 and node 16. To represent the direction of the historical flights that correspond to the edges 254-258 (e.g., from a departure airport to an arrival airport), each of the edges 254-258 point from a node that corresponds to a departure airport to a node that corresponds to an arrival airport. To illustrate, the first edge 254 points from node 00 to node 13, the second edge 256 points from node 00 to node 01, and the third edge 258 points from node 00 to node 16. As such, the first edge 254 represents a first historical flight that departed from airport 00 and arrived at airport 13, the second edge 256 represents a second historical flight that departed from airport 00 and arrived at airport 01, and the third edge 258 represents a third historical flight that departed from airport 00 and arrived at airport 16. One or more of the nodes 00-16 can be associated with respective node information 220, and one or more of the edges can be associated with respective link information 230.

As described above with reference to FIG. 1, one or more ranking operations can be performed on nodes of a directed graph to cause output of the target nodes 144. In some implementations, the ranking operations include link analysis operations performed by the link analysis engine 110 that ranks the nodes based on numbers of edges that point to the nodes, and optionally other information. As an illustrative example, the link analysis engine 110 can perform link analysis operations on the directed graph 250 to rank the nodes 00-16 based on the number of edges that point to each of the nodes 00-16, and optionally additional information included in the node information 220 for the respective nodes, additional information included in the link information 230 for the edges that point to the respective nodes, or both. To illustrate, if the weights of each of the links in the directed graph 250 are the same and if there are no priority nodes, the link analysis operations performed by the link analysis engine 110 may rank the nodes in the following order (from highest to lowest): node 16 (which is pointed to by edges from eleven nodes), node 06 and node 07 (which are each pointed to by edges from four nodes), node 11 and node 13 (which are each pointed to by edges from three nodes), nodes 03, 04, and 10 (which are each pointed to by edges from two nodes), nodes 00, 01, 02, 05, and 14 (which are each pointed to by edges from one node), and nodes 08, 09, 12, and 15 (which are each pointed to by zero edges).

In some of the above examples in which priority nodes are identified as nodes having a threshold number or more of edges that point at the nodes, at least some of nodes 00-07, 10, 11, 13, 14, and 16 can be identified as priority nodes. As an example, if the threshold is four, then nodes 06, 07, and 16 are identified as priority nodes, nodes 06 and 16 are pointed to by edges from two priority nodes, and node 04 is pointed to by one priority node (e.g., the priority directed link counts 229 for these nodes are two, two, and one, respectively). As another example, if the threshold is two, then nodes 03, 04, 06, 07, 10, 11, 13, and 16 are identified as priority nodes, node 16 is pointed to by six priority nodes (e.g., nodes 03, 04, 06, 07, 11, and 13), node 06 is pointed to by four priority nodes (e.g., nodes 03, 04, 07, and 16), nodes 04, 07, and 10 are pointed to by two priority nodes (e.g., nodes 03 and 16, nodes 03 and 10, and nodes 13 and 16, respectively), node 11 is pointed to by one priority node (e.g., node 10), and nodes 03 and 13 are pointed to by zero priority nodes. Accordingly, the priority directed link count 229 for node 16 is six, the priority directed link count 229 for node 06 is four, the priority directed link count 229 for nodes 04, 07, and 10 are two, the priority directed link count 229 for node 11 is one, and the priority directed link count 229 for nodes 03 and 13 are zero. The above-described examples are provided for illustration and are not limiting, in other examples, the ranking can be performed based on other information. Additionally, or alternatively, the nodes of the directed graph 250 can also be filtered based on one or more properties, such as aircraft type, flight time, passenger count, airline carrier, flight type, or the like.

In some other aspects, one or more ranking operations can be performed on nodes of a directed graph to cause output of the target nodes 144, and such ranking operations include clustering operations performed by the clustering engine 112 that identifies groups of nodes that are highly interconnected (e.g., that form sub-networks of the air travel network). In some such aspects, the clustering operations are associated with a label propagation algorithm. The label propagation algorithm can be performed according to the rules included in Table 1 below:

**Table 1: Stages of Clustering (LPA)**

| **Rule** | **Description** |
|---|---|
| 1 | Each node in the directed graph is initially assigned a unique community ID in a label. |
| 2 | The labels propagate through the directed graph, updating at each iteration. |
| 3 | During each iteration, a node updates its label to include the ID that a largest majority of its neighboring nodes include. In case of ties, a deterministic arbitrary rule can be applied. |
| 4 | The process continues until convergence is achieved, meaning that each node adopts the ID that is most prevalent among the labels of its neighbors, OR |
| 5 | The process continues until a maximum number of iterations is reached. |

As the labels propagate, densely connected groups of nodes can quickly converge on a single label, resulting in the disappearance of many labels. At the end of the propagation, only a few labels are likely to remain, indicating that nodes with the same label belong to the same group (e.g., the same community or sub-network). As an example for the directed graph 250, performing the clustering operations may result in identifying that nodes 03, 04, and 16 are included in a group due to the interconnectedness associated with node 03 having edges pointing to nodes 04 and 16, node 04 having an edge pointing to node 16 and being pointed to by edges from nodes 03 and 16, and node 16 having an edge that points to node 04 and being pointed to by edges from nodes 03 and 04.

FIG. 3 and FIG. 4 depict examples of GUIs that visualize directed graph-based prioritization of airports for traffic flow monitoring according to aspects described herein. For example, the GUIs described with reference to FIG. 3 and FIG. 4 may include or correspond to the GUI 132 of FIG. 1 generated by the client device 130, the air traffic modelling system 102, or both. The GUIs of FIG. 3 and FIG. 4 may be based on information included in a directed graph, such as the directed graph 250 of FIG. 2. It should be appreciated that the features described with reference to the GUIs of FIG. 3 and FIG. 4 are illustrative. Although illustrated and described as separate examples, features of the GUI of one of FIG. 3 and FIG. 4 may be included in GUIs described with reference to the other of FIG. 3 or FIG. 4. Additionally, or alternatively, one or more features of the GUIs of FIG. 3 and FIG. 4 may be optional or may be omitted in other aspects of the present disclosure.

FIG. 3 depicts an example of a GUI 300 that enables directed graph-based prioritization of airports for traffic flow monitoring. The GUI 300 includes a map portion 302 and an air traffic flow modelling priority display portion 304. The map portion 302 includes a map of a particular region or region(s) that includes departure airports and arrival airports within an air traffic network, such as a multi-region or global air traffic network. For example, the map portion 302 can include a map of a portion of a country, one or more countries, or a global map of Earth. The particular region(s) can be selected from a list of pre-defined regions; can be selected by scrolling, zooming in, zooming out; or combinations thereof. In aspects, the map portion 302 includes multiple airports, which can correspond to cities, that can be departure airports or arrival airports that are served by the air traffic network. In the example shown in FIG. 3, the map portion 302 includes airports in parts of Europe, Africa, and Asia. This example is illustrative, and in other examples, the map portion 302 includes other airports in other countries or continents.

The map portion 302 includes (e.g., the GUI 300 displays) one or more displayable indicators that represent airports within the air traffic network for which air traffic flow is to be modeled. These displayable indicators can be overlaid on a map depicted in the map portion 302. In the example shown in FIG. 3, the map portion 302 includes a first displayable indicator 306, a second displayable indicator 308, and a third displayable indicator 310. The first displayable indicator 306 represents a priority for air traffic flow modelling associated with a first airport, the second displayable indicator 308 represents a priority for air traffic flow modelling associated with a second airport (e.g., Porto, Portugal), and the third displayable indicator 310 represents a priority for air traffic flow modelling associated with a third airport. In some implementations, the map portion 302 includes displayable indicators associated with other airports (e.g., the various icons in FIG. 3) that represent priorities of the associated airports for air traffic flow modelling.

The displayable indicators 306-310 are based on respective airport indicators determined by ranking nodes of the directed graph 142. For example, the visualization engine 108 can generate the first displayable indicator 306 (e.g., one of the airport indicators 146) associated with one of the target nodes 144 output by the ranking engine 106. The visualization engine 108 can similarly generate the displayable indicators 308 and 310 (e.g., others of the airport indicators 146) associated with others of the target nodes 144 output by the ranking engine 106. To represent different rankings (e.g., prioritizations) associated with the various airports, the visualization engine 108 sets one or more characteristics of the displayable indicators 306-310 based on the ranking of the target nodes 144.

In the example shown in FIG. 3, the one or more characteristics include an icon (e.g., an icon type or shape), and the visualization engine 108 selects the icon to represent the displayable indicators 306-310 based on the rankings performed by the ranking engine 106. The air traffic flow modelling priority display portion 304 includes the various icons and indicates the associated air traffic flow modelling priorities. To illustrate, the air traffic flow modelling priority display portion 304 can include a first icon 320, a second icon 322, and a third icon 324. In the example shown in FIG. 3, the first icon 320 represents low priority for air traffic flow modelling, the second icon 322 represents medium priority for air traffic flow modelling, and the third icon 324 represents high priority for air traffic flow modelling. The priorities can be based on rankings of nodes of the directed graph 142. For example, nodes having a rank that exceeds (or is greater than or equal to) a first threshold can be assigned high priority, nodes having a rank that is less than or equal to (or less than) the first threshold and that exceeds (or is greater than or equal to) a second threshold can be assigned medium priority, and nodes having a rank that is less than or equal to (or less than) the second threshold can be assigned low priority. Although icons for three priority levels are shown and described with reference to FIG. 3, in other implementations, the number of priority levels can be greater than three or less than three. As an illustrative example, displayable icons associated with airports that correspond to the target nodes 144 can have a first icon (e.g., an icon associated with high priority) and displayable icons associated with a remainder of the airports in the map portion 302 can have a second icon (e.g., an icon associated with non-high priority).

In some implementations, the information displayed in the air traffic flow modelling priority display portion 304 is based on a user selection corresponding to the type of ranking to be performed on the directed graph 142. To illustrate, the air traffic flow modelling priority display portion 304 can include selectable indicators that enable a user to select between performance of link analysis operations, clustering operations, or both. In the example shown in FIG. 3, the air traffic flow modelling priority display portion 304 includes a link analysis selectable indicator 326 and a clustering selectable indicator 328. The selectable indicators 326, 328 can include buttons, check boxes, hyperlinks, or other interactive elements that enable a user to select one, or both, of the corresponding ranking operations to be performed. In the example shown in FIG. 3, the link analysis selectable indicator 326 is selected and the clustering selectable indicator 328 is not selected. Accordingly, the air traffic flow modelling priority display portion 304 includes information associated with air traffic flow modelling priority based on performance of link analysis operations by the link analysis engine 110, such as the icons 320-324.

In some such implementations, the visualization engine 108 selects one of the icons 320-324 for the displayable indicators 306-310 based on the rankings output by the link analysis engine 110. For example, if the directed graph 142 includes thirty nodes, the first threshold is five, and the second threshold is thirteen, the first displayable indicator 306 is assigned the first icon 320 based on the ranking associated with the node corresponding to the first displayable indicator 306 being thirteen or lower. Similarly, the second displayable indicator 308 is assigned the second icon 322 based on the ranking associated with the node corresponding to the second displayable indicator 308 being between five and twelve, and the third displayable indicator 310 is assigned the third icon 324 based on the ranking associated with the node corresponding to the third displayable indicator 310 being one of the four highest ranked nodes. As described above with reference to FIG. 1 and FIG. 2, the ranking of the nodes performed by the link analysis engine 110 is based on the number of edges that point to the nodes, the weights associated with the edges that point to the nodes, the number of other nodes having an edge that points to the nodes and having a threshold number of respective edges that point to the other nodes, or any combination thereof.

Thus, by setting each of the displayable indicators 306-310 to one of the icons 320-324, the visualization engine 108 causes the displayable indicators 306-310 to represent the priority associated with the corresponding airports in a manner that enables quick and efficient understanding by a human operator, such as an air traffic controller, a flight scheduler, or a pilot, of the priority of the airports to modelling air traffic flow for the air traffic network. For example, the third displayable indicator 310 indicates that modelling the air traffic flow for the airport associated with the third displayable indicator 310 is more important than modelling the air traffic flow associated with the airports that correspond to the first displayable indicator 306 and the second displayable indicator 308. Additionally, as described above, the airport that corresponds to the third displayable indicator 310 has a higher probability that an air traveler will arrive at or depart from the airport during a random flight, based on the historical flight data 140, than the airports that correspond to the first displayable indicator 306 and the second displayable indicator 308. In some implementations, the GUI 300 includes selectable options to initiate air traffic flow modelling for one or more of the airports in the map portion 302, such as airports having the third icon 324, or any of the airports that are selected.

In some implementations, the visualization engine 108 sets other characteristics of the displayable indicators 306-310 instead of, or in addition to, the icon type. For example, the displayable indicators 306-310 can have a first color (e.g., green) if the respective air traffic flow modelling priority is low, a second color (e.g., yellow) if the respective air traffic flow modelling priority is medium, and a third color (e.g., red) if the respective air traffic flow modelling is high. As another example, the displayable indicators 306-310 can have a first size (e.g., small) if the respective air traffic flow modelling priority is low, a second size (e.g., medium) if the respective air traffic flow modelling priority is medium, and a third size (e.g., large) if the respective air traffic flow modelling priority is high. As another example, the displayable indicators 306-310 can have a first intensity (e.g., low intensity) and/or a first font (e.g., an italicized font) if the respective air traffic flow modelling priority is low, a second intensity (e.g., normal intensity) and/or a second font (e.g., a default font) if the respective air traffic flow modelling priority is medium, and a third intensity (e.g., high intensity) and/or a third font (e.g., a bold font) if the respective air traffic flow modelling priority is high. In some implementations, one or more characteristics of the displayable indicators 306-310 that are controlled by the visualization engine 108 are selected based on user input.

In some implementations, one or more displayable indicators include, or are displayed together with, a label associated with the corresponding airport, a corresponding ranking, other information, or a combination thereof. For example, the second displayable indicator 308 may include, or be displayed with, a label 312 that includes an ICAO identifier ("LPPR"), a name ("Porto"), an International Air Transport Association (IATA) identifier ("OPO"), a country identifier ("PORT"), a region identifier ("Europe"), a rank ("10"), a community identifier ("20") (e.g., an identifier associated with a group or sub-network identified by the clustering engine 112, as further described herein with reference to FIG. 4), other information, or a combination thereof. Although particular information is shown in FIG. 3 as being included in the label 312, in other examples, the label 312 can omit one or more of the items shown in FIG. 3, the label 312 can include other information items, or both. Displaying the label 312 can assist in focusing the human operator's attention on an airport that is associated with a high priority for modelling air traffic flow in the air traffic network.

FIG. 4 depicts an example of a GUI 400 that enables directed graph-based prioritization of airports for traffic flow monitoring. The GUI 400 includes a map portion 402 and an air traffic flow modelling priority display portion 404. The map portion 402 includes a map of a particular region or region(s) that include departure airports and arrival airports within an air traffic network, such as a multi-region or global air traffic network. For example, the map portion 402 can include a map of a portion of a country, one or more countries, or a global map of Earth. The particular region(s) can be selected from a list of pre-defined regions; can be selected by scrolling, zooming in, zooming out; or combinations thereof. In aspects, the map portion 402 includes multiple airports, which can correspond to cities, that can be departure airports or arrival airports that are served by the air traffic network. In the example shown in FIG. 4, the map portion 402 includes airports in parts of Europe, Africa, and Asia. This example is illustrative, and in other examples, the map portion 402 includes other airports in other countries or continents.

The map portion 402 includes (e.g., the GUI 400 displays) one or more displayable indicators that represent airports within the air traffic network for which air traffic flow is to be modeled. These displayable indicators can be overlaid on a map depicted in the map portion 402. In the example shown in FIG. 4, the map portion 402 includes a first displayable indicator 406, a second displayable indicator 408, and a third displayable indicator 410. The first displayable indicator 406 represents a priority for air traffic flow modelling associated with a first airport that is related to whether the first airport is a member of a group of highly interconnected airports (e.g., a sub-network), the second displayable indicator 408 represents a priority for air traffic flow modelling associated with a second airport that is related to whether the second airport is a member of a sub-network, and the third displayable indicator 410 represents a priority for air traffic flow modelling associated with a third airport that is related to whether the third airport is a member of a sub-network. In some implementations, the map portion 402 includes displayable indicators associated with other airports (e.g., the various icons in FIG. 4) that represent priorities of the associated airports for air traffic flow modelling that are related to whether the other airports are members of a sub-network.

The displayable indicators 406-410 are based on respective airport indicators determined by ranking nodes of the directed graph 142. For example, the visualization engine 108 can generate the first displayable indicator 406 (e.g., one of the airport indicators 146) associated with one of the target nodes 144 output by the ranking engine 106. The visualization engine 108 can similarly generate the displayable indicators 408 and 410 (e.g., others of the airport indicators 146) associated with others of the target nodes 144 output by the ranking engine 106. To represent different rankings (e.g., prioritizations) associated with the various airports, the visualization engine 108 sets one or more characteristics of the displayable indicators 406-410 based on the ranking of the target nodes 144.

In the example shown in FIG. 4, the one or more characteristics include an icon (e.g., an icon type or shape), and the visualization engine 108 selects the icon to represent the displayable indicators 406-410 based on the rankings performed by the ranking engine 106. The air traffic flow modelling priority display portion 404 includes the various icons and indicates the associated air traffic flow modelling priorities that are related to membership in group(s) of highly interconnected airports (e.g., sub-network(s)). To illustrate, the air traffic flow modelling priority display portion 404 can include a first icon 412, a second icon 414, and a third icon 416. In the example shown in FIG. 4, the first icon 412 represents membership in a first group (e.g., a first sub-network) with respect to air traffic flow modelling, the second icon 414 represents membership in a second group (e.g., a second sub-network) with respect to air traffic flow modelling, and the third icon 416 represents that the corresponding airports are not members of any group of highly interconnected airports (e.g., any sub-networks). The priority groupings can be based on rankings of nodes of the directed graph 142. For example, nodes identified as belonging to the first group can be assigned the first icon 412, nodes identified as belonging to a second group can be assigned the second icon 414, and nodes identified as not belonging to any group can be assigned low priority. Although icons for two groups are shown and described with reference to FIG. 4, in other implementations, the number of groups can be greater than two or less than two, airports not included in a group can be omitted (e.g., a displayable indicator is not displayed), or a combination thereof.

In some implementations, the information displayed in the air traffic flow modelling priority display portion 404 is based on a user selection corresponding to the type of ranking to be performed on the directed graph 142. To illustrate, the air traffic flow modelling priority display portion 404 can include selectable indicators that enable a user to select between performance of link analysis operations, clustering operations, or both. In the example shown in FIG. 4, the air traffic flow modelling priority display portion 404 includes a link analysis selectable indicator 420 and a clustering selectable indicator 422, which include or correspond to the link analysis selectable indicator 326 and the clustering selectable indicator 328 of FIG. 3, respectively. In the example shown in FIG. 4, the clustering selectable indicator 422 is selected and the link analysis selectable indicator 420 is not selected. Accordingly, the air traffic flow modelling priority display portion 404 includes information associated with air traffic flow modelling priority based on performance of clustering operations by the clustering engine 112, such as the icons 412-416. In some aspects, the air traffic flow modelling priority display portion 404 includes an iteration limit 418 that represents the maximum number of iterations of the clustering algorithm to be performed by the clustering engine 112. The iteration limit 418 can be a default or system-determined value or can be based on user input. For example, the iteration limit 418 can be displayed via a selectable indicator that enables the user to adjust the iteration limit 418. Additionally, or alternatively, the selectable indicator can be configured to enable the user to select no iteration limit, such that the clustering algorithm is performed until convergence.

In implementations in which the clustering selectable indicator 422 is selected, the visualization engine 108 selects one of the icons 412-416 for the displayable indicators 406-410 based on the groupings (e.g., rankings) output by the clustering engine 112. For example, if the target nodes 144 include a first group that includes four nodes and a second group that includes three nodes, and a remaining twenty-three nodes are not included in either group, the first displayable indicator 406 is assigned the third icon 416 based on the node corresponding to the first displayable indicator 406 not being included in the first group or the second group. Similarly, the second displayable indicator 408 is assigned the first icon 412 based on the node corresponding to the second displayable indicator 408 being a member of the first group, and the third displayable indicator 410 is assigned the second icon 414 based on the node corresponding to the third displayable indicator 410 being a member of the second group. As described above with reference to FIG. 1 and FIG. 2, the clustering of the nodes performed by the clustering engine 112 is based on a label propagation algorithm that includes labeling each node based on community (e.g., group) membership and adjusting labels after each iteration based on labels of a majority of neighboring nodes.

Thus, by setting each of the displayable indicators 406-410 to one of the icons 412-416, the visualization engine 108 causes the displayable indicators 406-410 to represent the priority groupings (e.g., membership in sub-networks) associated with the corresponding airports in a manner that enables quick and efficient understanding by a human operator, such as an air traffic controller, a flight scheduler, or a pilot, of the for modelling air traffic flow for the air traffic network. For example, the second displayable indicator 408 indicates that modelling the air traffic flow for the airport associated with the second displayable indicator 408 is strongly related to the air traffic flow of three other airports that are included in the first group (e.g., the first sub-network), and therefore modelling the air traffic flow of one or more airports included in the first group can be more important than modelling the air traffic flow associated with airports that are not included in a group, such as the airport that corresponds to the first displayable indicator 406. In some implementations, the GUI 400 includes selectable options to initiate air traffic flow modelling for one or more of the airports in the map portion 402, such as airports having the first icon 412 or the second icon 414, or any of the airports that are selected.

In some implementations, the visualization engine 108 sets other characteristics of the displayable indicators 406-410 instead of, or in addition to, the icon type. For example, the displayable indicators 406-410 can have a first color (e.g., red) if the respective airports are included in the first group, a second color (e.g., yellow) if the respective airports are included in the second group, and a third color (e.g., green) if the respective airports are not included in the first or second groups. As another example, the displayable indicators 406-410 can have a first size (e.g., large) if the respective airports are included in the first group, a second size (e.g., medium) if the respective airports are included in the second group, and a third size (e.g., small) if the respective airports are not included in the first or second groups. As another example, the displayable indicators 406-410 can have a first intensity (e.g., high intensity) and/or a first font (e.g., a bold font) if the respective airports are included in the first group, a second intensity (e.g., normal intensity) and/or a second font (e.g., an underlined font) if the respective airports are included in the second group, and a third intensity (e.g., low intensity) and/or a third font (e.g., a default font) if the respective airports are not included in the first or second groups. In some implementations, one or more characteristics of the displayable indicators 406-410 that are controlled by the visualization engine 108 are selected based on user input. In some implementations, the displayable indicators 406-412 include or are displayed with respective label(s), such as the label 312 described with reference to FIG. 3.

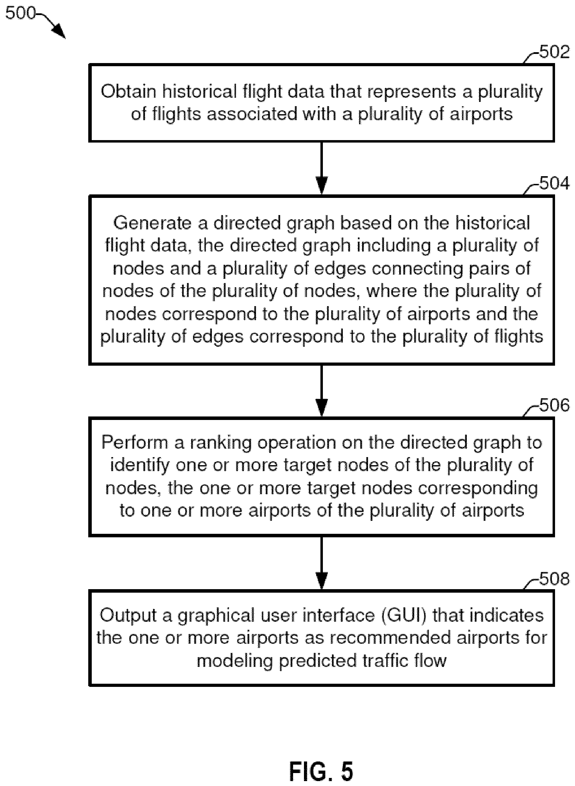

FIG. 5 is a flowchart that illustrates an example of a method 500 of directed graph-based prioritization of airports for traffic flow monitoring. The method 500 can be initiated, performed, or controlled by one or more processors executing instructions, or by circuitry configured to cause performance of one or more operations, that resides within the air traffic modelling system 102 of FIG. 1, the client device 130 of FIG. 1, or a combination thereof.

In some implementations, the method 500 includes, at block 502, obtaining historical flight data that represents a plurality of flights associated with a plurality of airports. For example, the air traffic modelling system 102 of FIG. 1 can obtain the historical flight data 140 from the global flight database 120.

The method 500 also includes, at block 504, generating a directed graph based on the historical flight data. For example, the airport graph engine 104 of FIG. 1 can generate the directed graph 142 based on the historical flight data 140. The directed graph includes a plurality of nodes and a plurality of edges connecting pairs of nodes of the plurality of nodes. The plurality of nodes correspond to the plurality of airports and the plurality of edges correspond to the plurality of flights. Examples of directed graphs with multiple nodes and multiple edges include or correspond to the directed graph 200 or the directed graph 250 of FIG. 2.

The method 500 includes, at block 506, performing a ranking operation on the directed graph to identify one or more target nodes of the plurality of nodes. For example, the ranking engine 106 of FIG. 1 can perform one or more ranking operations on the directed graph 142 to identify the target nodes 144. The one or more target nodes correspond to one or more airports of the plurality of airports.

The method 500 includes, at block 508, outputting a GUI that indicates the one or more airports as recommended airports for modeling predicted traffic flow. For example, the visualization engine 108 can output the airport indicators 146 that correspond to the target nodes 144, and the airport indicators 146 are included in the GUI 132 that is generated by the client device 130 and/or the visualization engine 108.

In some implementations, performing the ranking operation includes utilizing a link analysis algorithm that ranks the plurality of nodes based on, for each node: a number of edges that point to the node, a weight associated with the edges that point to the node, a number of other nodes having an edge that points to the node and having a threshold number of respective edges that point to the other nodes, or any combination thereof. For example, the ranking operation can be a link analysis operation performed by the link analysis engine 110 of FIG. 1. In some such implementations, the one or more airports identified by the link analysis algorithm represent one or more airports having highest probabilities that an air traveler will arrive at or depart from the one or more airports during a random flight.

Additionally, or alternatively, performing the ranking operation can include utilizing a clustering algorithm that clusters the plurality of nodes into one or more groups based on labels of connected nodes. For example, the ranking operation can be a clustering operation performed by the clustering engine 112 of FIG. 1. In some such implementations, the one or more airports identified by the clustering algorithm represent a subset of airports for which air traffic flow is highly interconnected. Additionally, or alternatively, the method 500 can include utilizing the clustering algorithm until convergence or until a number of iterations performed satisfies an iteration limit, as further described above with reference to FIG. 2. In some such implementations, the method 500 further includes receiving user input that indicates the iteration limit. For example, the user input can include or correspond to the user input 148 of FIG. 1 or a user input associated with the iteration limit 418 of FIG. 4.

In some implementations, the method 500 also includes adjusting weights of one or more of the plurality of edges based on one or more flight parameters indicated by user input. For example, the weights of edges of the directed graph 142 can be adjusted based on parameters indicated by the user input 148, as further described above with reference to FIG. 1. Additionally, or alternatively, the GUI can include a map that includes the one or more airports. For example, the GUI can include or correspond to the GUI 300 of FIG. 3 that includes the map portion 302 or the GUI 400 of FIG. 4 that includes the map portion 402. In some such implementations, the GUI includes, for each of the one or more airports, a respective label that includes an identifier, ranking information, group information, or a combination thereof. For example, the label can include or correspond to the label 312 of FIG. 3.

In some implementations, the GUI includes a map that includes the plurality of airports, the one or more airports are displayed having a first characteristic, and a remainder of the plurality of airports are displayed having a second characteristic. For example, the GUI can include or correspond to the GUI 300 of FIG. 3 that includes the first displayable indicator 306 and the second displayable indicator 308 having different icons than a remainder of the displayable indicators that includes the third displayable indicator 310. The first characteristic can include a different color, a different intensity, a different font, a different icon, or a combination thereof, than the second characteristic.

In some implementations, the historical flight data includes, for each of the plurality of flights, a departure airport and an arrival airport associated with the flight, an on-time status of the flight, an airline carrier associated with the flight, a geographic region associated with the flight, an aircraft type associated with the flight, or a combination thereof. In some such implementations, the method 500 further includes, prior to performing the ranking operation, filtering the directed graph based on one or more parameters that include on-time status, airline carrier, geographic region, aircraft type, or a combination thereof. For example, the ranking engine 106 or the airport graph engine 104 can filter the directed graph 142 based on one or more characteristics, as described above with reference to FIG. 1. In some such implementations, the method 500 also includes receiving user input that indicates one or more values of the one or more parameters. For example, the user input can include or correspond to the user input 148 of FIG. 1.

The method described above with reference to FIG. 5 can be implemented to realize one or more of the technical advantages described in more detail above. For example, the method 500 can identify and display particular airports within a larger air traffic network, based on ranking of nodes of a directed graph, that have the most effect on air traffic flow within the air traffic network. For example, the particular airports can be the most interconnected within the air traffic network or can be a small community of highly interconnected airports, from an air traffic flow point of view, and thus are priority airports for modelling air traffic flow for the larger air traffic network. To illustrate, modelling air traffic flow at the airport-level for the identified particular airports and aggregating the results can provide a network-level modelling of air traffic flow that is more accurate and has more predictive capability than other air traffic flow modelling systems that model air traffic flow of airports associated with the most passengers or the largest population cities. This higher accuracy air traffic flow modelling is achieved without the significant processing resource use and time-consuming training of modelling the air traffic flow for each airport in the air traffic network. Thus, the air traffic flow modelling provided by the method 500 can be scaled to large air traffic networks, such as multi-region or global air traffic networks in a practical manner with existing computer systems in a cost-effective deployment.

FIG. 6 is a block diagram of a computing environment 600 including a computing device 610 configured to support aspects of computer-implemented methods and computer-executable program instructions (or code) according to the present disclosure. For example, the computing device 610, or portions thereof, is configured to execute instructions to initiate, perform, or control one or more operations described with reference to FIGs. 1-5.

The computing device 610 includes one or more processors 620. The processor(s) 620 are configured to communicate with system memory 630, one or more storage devices 640, one or more input/output interfaces 650, one or more communications interfaces 660, or any combination thereof. The system memory 630 includes volatile memory devices (e.g., random access memory (RAM) devices), nonvolatile memory devices (e.g., read-only memory (ROM) devices, programmable read-only memory, and flash memory), or both. The system memory 630 stores an operating system 632, which can include a basic input/output system for booting the computing device 610 as well as a full operating system to enable the computing device 610 to interact with users, other programs, and other devices. The system memory 630 stores program data 636, a directed graph 637, one or more target nodes 638, a GUI 639, or a combination thereof. The directed graph 637 can include or correspond to the directed graph 142 generated by the airport graph engine 104 of FIG. 1 or the directed graph 250 of FIG. 2. The target node(s) 638 can include or correspond to the target nodes 144 generated by the ranking engine 106 of FIG. 1. The GUI 639 can include or correspond to the GUI 132 that includes the airport indicators 146 output by the visualization engine 108 of FIG. 1, the GUI 300 of FIG. 3, or the GUI 400 of FIG. 4.

The system memory 630 includes one or more applications 634 (e.g., sets of instructions) executable by the processor(s) 620. As an example, the one or more applications 634 include instructions executable by the processor(s) 620 to initiate, control, or perform one or more operations described with reference to FIG. 1-7. To illustrate, the one or more applications 634 include instructions 635 executable by the processor(s) 620 to initiate, control, or perform one or more operations described with reference to the air traffic modelling system 102 of FIG. 1, the client device 130 of FIG. 1, or a combination thereof.

In a particular implementation, the system memory 630 includes a non-transitory, computer readable medium storing instructions 635 that, when executed by the processor(s) 620, cause the processor(s) 620 to perform direct graph-based prioritization of airports for traffic flow monitoring. The operations include obtaining the historical flight data that represents a plurality of flights associated with a plurality of airports. The operations also include generating the directed graph 637 based on the historical flight data. The directed graph 637 includes a plurality of nodes and a plurality of edges connecting pairs of nodes of the plurality of nodes. The plurality of nodes correspond to the plurality of airports and the plurality of edges correspond to the plurality of flights. The operations include performing a ranking operation on the directed graph 637 to identify the target node(s) 638 of the plurality of nodes. The target node(s) 638 correspond to one or more airports of the plurality of airports. The operations further include outputting a GUI 639 that indicates the one or more airports as recommended airports for modeling predicted traffic flow.

The one or more storage devices 640 include nonvolatile storage devices, such as magnetic disks, optical disks, or flash memory devices. In a particular example, the storage devices 640 include both removable and non-removable memory devices. The storage devices 640 are configured to store an operating system, images of operating systems, applications (e.g., one or more of the applications 634), and program data (e.g., the program data 636). In a particular aspect, the system memory 630, the storage devices 640, or both, include tangible (i.e., non-transitory) computer-readable media. In a particular aspect, one or more of the storage devices 640 are external to the computing device 610.

The one or more input/output interfaces 650 enable the computing device 610 to communicate with one or more input/output devices 670 to facilitate user interaction. For example, the one or more input/output interfaces 650 can include a display interface, an input interface, or both. For example, the input/output interface 650 is adapted to receive input from a user, to receive input from another computing device, or a combination thereof. In some implementations, the input/output interface 650 conforms to one or more standard interface protocols, including serial interfaces (e.g., universal serial bus (USB) interfaces or Institute of Electrical and Electronics Engineers (IEEE) interface standards), parallel interfaces, display adapters, audio adapters, or custom interfaces ("IEEE" is a registered trademark of The Institute of Electrical and Electronics Engineers, Inc. of Piscataway, New Jersey). In some implementations, the input/output device 670 includes one or more user interface devices and displays, including some combination of buttons, keyboards, pointing devices, displays, speakers, microphones, touch screens, and other devices.

The processor(s) 620 are configured to communicate with devices or controllers 680 via the one or more communications interfaces 660. For example, the one or more communications interfaces 660 can include a network interface. The devices or controllers 680 can include, for example, devices that measure data associated with an aircraft, network devices, client devices, servers, cloud-based devices, one or more other devices, or any combination thereof.

In some implementations, a non-transitory, computer readable medium stores instructions that, when executed by one or more processors, cause the one or more processors to initiate, perform, or control operations to perform part or all of the functionality described above. For example, the instructions can be executable to implement one or more of the operations or methods of FIGs. 1-6. In some implementations, part or all of one or more of the operations or methods of FIGs. 1-6 can be implemented by one or more processors (e.g., one or more central processing units (CPUs), one or more graphics processing units (GPUs), one or more digital signal processors (DSPs), one or more field-programmable gate arrays (FPGAs), or one or more application-specific integrated circuits (ASICs)) executing instructions, by dedicated hardware circuitry, or any combination thereof.

The illustrations of the examples described herein are intended to provide a general understanding of the structure of the various implementations. The illustrations are not intended to serve as a complete description of all of the elements and features of apparatus and systems that utilize the structures or methods described herein. Many other implementations may be apparent to those of skill in the art upon reviewing the disclosure. Other implementations may be utilized and derived from the disclosure, such that structural and logical substitutions and changes may be made without departing from the scope of the disclosure. For example, method operations may be performed in a different order than shown in the figures or one or more method operations may be omitted. Accordingly, the disclosure and the figures are to be regarded as illustrative rather than restrictive.

Aspects of the disclosure are described further with reference to the following set of interrelated examples:
According to Example 1, a device includes a memory; and one or more processors coupled to the memory and configured to: obtain historical flight data that represents a plurality of flights associated with a plurality of airports; generate a directed graph based on the historical flight data, the directed graph including a plurality of nodes and a plurality of edges connecting pairs of nodes of the plurality of nodes, wherein the plurality of nodes correspond to the plurality of airports and the plurality of edges correspond to the plurality of flights; perform a ranking operation on the directed graph to identify one or more target nodes of the plurality of nodes, the one or more target nodes corresponding to one or more airports of the plurality of airports; and output a graphical user interface (GUI) that indicates the one or more airports as recommended airports for modeling predicted traffic flow.
Example 2 includes the device of Example 1, wherein performance of the ranking operation utilizes a link analysis algorithm that ranks the plurality of nodes based on, for each node: a number of edges that point to the node; a weight associated with the edges that point to the node; a number of other nodes having an edge that points to the node and having a threshold number of respective edges that point to the other nodes; or any combination thereof.
Example 3 includes the device of Example 2, wherein the one or more airports identified by the link analysis algorithm represent one or more airports having highest probabilities that an air traveler will arrive at or depart from the one or more airports during a random flight.
Example 4 includes the device of any of Examples 1 to Example 3, wherein performance of the ranking operation utilizes a clustering algorithm that clusters the plurality of nodes into one or more groups based on labels of connected nodes.
Example 5 includes the device of Example 4, wherein the one or more airports identified by the clustering algorithm represent a subset of airports for which air traffic flow is highly interconnected.
Example 6 includes the device of Example 4 or Example 5, wherein the one or more processors are further configured to utilize the clustering algorithm until convergence or until a number of iterations performed satisfies an iteration limit.
Example 7 includes the device of Example 6, wherein the one or more processors are further configured to receive user input that indicates the iteration limit.
Example 8 includes the device of any of Examples 1 to 7, wherein the one or more processors are further configured to adjust weights of one or more of the plurality of edges based on one or more flight parameters indicated by user input.
Example 9 includes the device of any of Examples 1 to 8, wherein the GUI includes a map that includes the plurality of airports, wherein the one or more airports are displayed having a first characteristic, and wherein a remainder of the plurality of airports are displayed having a second characteristic.
Example 10 includes the device of Example 9, wherein the first characteristic includes a different color, a different intensity, a different font, a different icon, or a combination thereof, than the second characteristic.
Example 11 includes the device of any of Examples 1 to 10, wherein the GUI includes a map that includes the one or more airports.
Example 12 includes the device of any of Examples 1 to 11, wherein the GUI includes a map that includes the plurality of airports, and wherein the GUI includes, for each of the one or more airports, a respective label that includes an identifier, ranking information, group information, or a combination thereof.
Example 13 includes the device of any of Examples 1 to 12, wherein the historical flight data includes, for each of the plurality of flights, a departure airport and an arrival airport associated with the flight, an on-time status of the flight, an airline carrier associated with the flight, a geographic region associated with the flight, an aircraft type associated with the flight, or a combination thereof.
Example 14 includes the device of Example 13, wherein the one or more processors are further configured to, prior to performance of the ranking operation, filter the directed graph based on one or more parameters that include on-time status, airline carrier, geographic region, aircraft type, or a combination thereof.
Example 15 includes the device of Example 14, wherein the one or more processors are further configured to receive user input that indicates one or more values of the one or more parameters.
According to Example 16, a method includes: obtaining, by one or more processors, historical flight data that represents a plurality of flights associated with a plurality of airports; generating, by the one or more processors, a directed graph based on the historical flight data, the directed graph including a plurality of nodes and a plurality of edges connecting pairs of nodes of the plurality of nodes, wherein the plurality of nodes correspond to the plurality of airports and the plurality of edges correspond to the plurality of flights; performing, by the one or more processors, a ranking operation on the directed graph to identify one or more target nodes of the plurality of nodes, the one or more target nodes corresponding to one or more airports of the plurality of airports; and outputting, by the one or more processors, a graphical user interface (GUI) that indicates the one or more airports as recommended airports for modeling predicted traffic flow.
Example 17 includes the method of Example 16, wherein said performing the ranking operation comprises utilizing a link analysis algorithm that ranks the plurality of nodes based on, for each node: a number of edges that point to the node; a weight associated with the edges that point to the node; a number of other nodes having an edge that points to the node and having a threshold number of respective edges that point to the other nodes; or any combination thereof.
Example 18 includes the method of Example 16 or Example 17, wherein said performing the ranking operation comprises utilizing a clustering algorithm that clusters the plurality of nodes into one or more groups based on labels of connected nodes.
According to Example 19, a non-transitory, computer readable medium storing instructions that, when executed by one or more processors, cause the one or more processors to perform operations including: obtaining historical flight data that represents a plurality of flights associated with a plurality of airports; generating a directed graph based on the historical flight data, the directed graph including a plurality of nodes and a plurality of edges connecting pairs of nodes of the plurality of nodes, wherein the plurality of nodes correspond to the plurality of airports and the plurality of edges correspond to the plurality of flights; performing a ranking operation on the directed graph to identify one or more target nodes of the plurality of nodes, the one or more target nodes corresponding to one or more airports of the plurality of airports; and outputting a graphical user interface (GUI) that indicates the one or more airports as recommended airports for modeling predicted traffic flow.
Example 20 includes the non-transitory, computer readable medium of Example 19, wherein the GUI comprises a map that includes the plurality of airports, wherein the one or more airports are displayed with a first characteristic that includes a first color, a first intensity, a first font, a first icon, or a combination thereof, and wherein a remainder of the plurality of airports are displayed with a second characteristic that includes a second color, a second intensity, a second font, a second icon, or a combination thereof.

Moreover, although specific examples have been illustrated and described herein, it should be appreciated that any subsequent arrangement designed to achieve the same or similar results may be substituted for the specific implementations shown. This disclosure is intended to cover any and all subsequent adaptations or variations of various implementations. Combinations of the above implementations, and other implementations not specifically described herein, will be apparent to those of skill in the art upon reviewing the description.

The Abstract of the Disclosure is submitted with the understanding that it will not be used to interpret or limit the scope or meaning of the claims. In addition, in the foregoing Detailed Description, various features may be grouped together or described in a single implementation for the purpose of streamlining the disclosure. Examples described above illustrate but do not limit the disclosure. It should also be understood that numerous modifications and variations are possible in accordance with the principles of the present disclosure. As the following claims reflect, the claimed subject matter may be directed to less than all of the features of any of the disclosed examples. Accordingly, the scope of the disclosure is defined by the following claims and their equivalents.

## Claims

1. A device comprising:
a memory; and
one or more processors coupled to the memory and configured to:
obtain historical flight data (140) that represents a plurality of flights associated with a plurality of airports;
generate a directed graph (142) based on the historical flight data (140), the directed graph (142) including a plurality of nodes and a plurality of edges connecting pairs of nodes of the plurality of nodes, wherein the plurality of nodes correspond to the plurality of airports and the plurality of edges correspond to the plurality of flights;
perform a ranking operation on the directed graph (142) to identify one or more target nodes (144) of the plurality of nodes, the one or more target nodes (144) corresponding to one or more airports of the plurality of airports; and
output a graphical user interface (GUI) 132 that indicates the one or more airports as recommended airports for modeling predicted traffic flow.

2. The device of claim 1, wherein performance of the ranking operation utilizes a link analysis algorithm that ranks the plurality of nodes based on, for each node:
a number (226) of edges that point to the node;
a weight (228) associated with the edges that point to the node;
a number (229) of other nodes having an edge that points to the node and having a threshold number of respective edges that point to the other nodes; or
any combination thereof.

3. The device of claim 2, wherein the one or more airports identified by the link analysis algorithm represent one or more airports having highest probabilities that an air traveler will arrive at or depart from the one or more airports during a random flight.

4. The device of any one of claims 1 to 3, wherein performance of the ranking operation utilizes a clustering algorithm that clusters the plurality of nodes into one or more groups based on labels of connected nodes.

5. The device of claim 4, wherein the one or more airports identified by the clustering algorithm represent a subset of airports for which air traffic flow is highly interconnected.

6. The device of any one of claims 4 or 5, wherein the one or more processors are further configured to utilize the clustering algorithm until convergence or until a number of iterations performed satisfies an iteration limit (418).

7. The device of claim 6, wherein the one or more processors are further configured to receive user input (148) that indicates the iteration limit (418).

8. The device of any one of claims 1 to 7, wherein the one or more processors are further configured to adjust weights of one or more of the plurality of edges based on one or more flight parameters indicated by user input.

9. The device of any one of claims 1 to 8, wherein the GUI (132) includes a map (302, 402) that includes the plurality of airports, wherein the one or more airports are displayed having a first characteristic, and wherein a remainder of the plurality of airports are displayed having a second characteristic.

10. The device of claim 9, wherein the first characteristic includes a different color, a different intensity, a different font, a different icon, or a combination thereof, than the second characteristic.

11. The device of any one of claims 1 to 10, wherein the GUI (132) includes a map (302, 402) that includes the one or more airports.

12. The device of any one of claims 1 to 11, wherein the GUI (132) includes a map (302, 402) that includes the plurality of airports, and wherein the GUI (132) includes, for each of the one or more airports, a respective label (312) that includes an identifier, ranking information, group information, or a combination thereof.

13. A method comprising:
obtaining, by one or more processors, historical flight data (140) that represents a plurality of flights associated with a plurality of airports;
generating, by the one or more processors, a directed graph (142) based on the historical flight data (140), the directed graph (142) including a plurality of nodes and a plurality of edges connecting pairs of nodes of the plurality of nodes, wherein the plurality of nodes correspond to the plurality of airports and the plurality of edges correspond to the plurality of flights;
performing, by the one or more processors, a ranking operation on the directed graph (142) to identify one or more target nodes (144) of the plurality of nodes, the one or more target nodes (144) corresponding to one or more airports of the plurality of airports; and
outputting, by the one or more processors, a graphical user interface (GUI) 132 that indicates the one or more airports as recommended airports for modeling predicted traffic flow.

14. The method of claim 13, wherein said performing the ranking operation comprises utilizing a link analysis algorithm that ranks the plurality of nodes based on, for each node:
a number (226) of edges that point to the node;
a weight (228) associated with the edges that point to the node;
a number (229) of other nodes having an edge that points to the node and having a threshold number of respective edges that point to the other nodes; or
any combination thereof.

15. A non-transitory, computer readable medium storing instructions that, when executed by one or more processors, cause the one or more processors to perform operations comprising:
obtaining historical flight data (140) that represents a plurality of flights associated with a plurality of airports;
generating a directed graph (142) based on the historical flight data (140), the directed graph (142) including a plurality of nodes and a plurality of edges connecting pairs of nodes of the plurality of nodes, wherein the plurality of nodes correspond to the plurality of airports and the plurality of edges correspond to the plurality of flights;
performing a ranking operation on the directed graph (142) to identify one or more target nodes (144) of the plurality of nodes, the one or more target nodes (144) corresponding to one or more airports of the plurality of airports; and
outputting a graphical user interface (GUI) 132 that indicates the one or more airports as recommended airports for modeling predicted traffic flow.
